# EUROPÄISCHE PATENTANMELDUNG

(11) **EP 0 598 986 A1**
(43) Veröffentlichungstag der Anmeldung: **01.06.1994**
(21) Anmeldenummer: 93111793.1
(22) Anmeldetag: 23.07.1993
(51) Int. Cl.: G01M 3/00

(54) **Vorrichtung zur Prüfung von Hohlräumen**

(30) Priorität: 27.11.1992 DE 4239914
(71) Anmelder: Daimler-Benz Aerospace Aktiengesellschaft, D-81663 München (DE)
(72) Erfinder: Puttinger, Dietmar, D-80802 München (DE); Ertl, Herbert, D-82335 Berg (DE)

(57) **Zusammenfassung**

Die Vorrichtung zur Prüfung von Hohlräumen enthält eine Vorschubeinrichtung, einen Vorschubwagen und einen an ihm befestigen Prüfkopf. Der Vorschubwagen ist in zwei Wagenhälften unterteilt, die im Abstand voneinander und in Längsrichtung gesehen hintereinander angeordnet sind, wobei die vordere Wagenhälfte mit dem Prüfkopf versehen ist, die hintere Wagenhälfte mit der Vorschubeinrichtung verbunden ist, beide Wagenhälften mit einer Spreizvorrichtung versehen sind und beide Wagenhälften über eine den Abstand zwischen ihnen periodisch verändernde Koppeleinrichtung verbunden sind.

## Beschreibung

Die vorliegende Erfindung betrifft eine Vorrichtung zur Prüfung von Hohlräumen, wie Kanälen, Rohrleitungen oder dgl., die einen Prüfkopf, einen Vorschubwagen und eine Vorschubeinrichtung aufweist, um den Vorschubwagen und den an ihr befestigten Prüfkopf in den zu inspizierenden Hohlräumen zu verschieben.

Bei Hohlräumen mit engem Querschnitt, wie z.B. Abwasserkanälen, Trinkwasserleitungen, Pipelines, Kamine und ähnlichem, sind regelmäßige Überprüfungen erforderlich, um Erosions- und Korrosionsschäden rechtzeitig zu entdecken, so daß Leckagen aufgrund von Undichtigkeiten bzw. Brüchen und die damit verbundenen Umweltbeeinträchtigungen bzw. Fluidverluste rechtzeitig verhindert werden.

Aus der DE-U 91 03 870 ist eine Vorrichtung zur Prüfung von Hohlräumen auf Dichtigkeit bekannt, wobei ein verfahrbares fernsteuerbares Gerät mit mindestens zwei im Abstand voneinander vorgesehenen Abdichteinrichtungen in dem zu überprüfenden Hohlraum vorgesehen ist. Das Gerät ist mit einer an- und abkuppelbaren Abdichteinheit versehen, auf der die eine Abdichteinrichtung angeordnet ist, während die andere Abdichteinrichtung mit dem verfahrbaren Gerät in fester Verbindung steht; das Gerät kann einer beliebigen Stelle im zu überprüfenden Hohlraum positioniert werden, wonach der abkuppelbare Teil an eine andere Stellung verfahren wird, um so den Abschnitt zwischen den beiden Geräten im Hohlraum auf Dichtigkeit zu überprüfen. Das verfahrbare Gerät ist dabei als Selbstfahrer ausgestaltet, der mit Rädern versehen ist, die über einen im Gerät eingebauten Motor antreibbar sind, der dabei entweder über ein Kabel oder über Funk gesteuert werden kann und auf dem Boden der zu überprüfenden Leitung abrollt. Abgesehen von der großen Strecke, die zwischen den beiden miteinander kuppelbaren Geräten zur Dichtigkeitsprüfung eingenommen werden muß, um nicht eine Unzahl von Messungen durchführen zu müssen, besteht ein erheblicher Nachteil darin, daß infolge Schlammablagerungen die Reibung zwischen den Antriebsrädern des verfahrbaren Gerätes und der Innenfläche des zu überprüfenden Hohlraums vermindert ist, so daß ein Vorschub des Gerätes mit dem schweren Schleppkabel innerhalb der Rohrleitung nicht mehr gewährleistet ist. Sollte der Vorschub außerdem, wie es üblich ist, durch die Anzahl der Umdrehungen der Antriebsräder gemessen werden, so erhält man verfälschte Meßergebnisse, ohne daß dies bei der Auswertung bemerkt wird.

Aus der älteren Anmeldung P 42 20 900 der Anmelderin ist eine Vorrichtung zur Prüfung von Hohlräumen bekannt, die mindestens einen Prüfkopf und eine mit dem Prüfkopf verbundene Vorschubeinrichtung aufweist, um den Prüfkopf in den zu inspizierenden Hohlräumen zu verschieben, wobei die Vorschubeinrichtung aus einem biegeflexiblen schubsteifen Hohlkörper besteht in Form eines armierten Schlauchs oder Gliederhohlkörpers; der Schlauch kann dabei in Teilstücke unterteilt sein, die über Verbindungselemente miteinander verbunden sind, wobei die Verbindungselemente ein konzentrisch zum Schlauch gelagertes in Längsrichtung verschiebbares Ringteil aufweisen, entweder in Form einer Schiebemuffe, die mit einer Druckfeder und einem Ventilblock zusammenwirkt oder in Form von zwei zylindrischen Abschnitten mit gegenläufigen Außengewinden, die über ein Antriebsrad mit einem Motor zusammenwirken, so daß sich die Abschnitte gegenläufig drehen. Das Verbindungselement ist ferner mit einer den Reibungswiderstand zwischen ihm und der Innenwand des zu überprüfenden Hohlraums erhöhenden Vorrichtung versehen, z.B. in Form einer Bürste, einer aufblasbaren Gummimanschette oder unter einem Winkel zur Vorschubrichtung angeordneten Widerhaken.

Diese bekannte Vorrichtung ist für Hohlräume von mehreren hundert Metern Länge gedacht, wobei die biegeflexible aber schubsteife Vorschubeinrichtung in Form eines armierten Schlauches, an dessen vorderem Ende der Prüfkopf mit der zugehörigen Dichtungseinrichtung befestigt ist, für den Transport auf einer Aufwickelhaspel aufgerollt wird, die z.B. auf der Ladefläche eines Transportfahrzeuges angeordnet ist. Während des Einsatzes wird der biegeflexible Schlauch mit Hilfe eines mechanischen Antriebs über einen Schwenkausleger und eine an ihm befestigte Umlenkrolle sowie eine Einführeinrichtung in den zu inspizierenden Hohlraum, z.B. einen Abwasserkanal eingeführt.

Diese bekannte Vorrichtung erzeugt also eine raupenförmige Bewegung dahingehend, daß der Schlauchabschnitt zwischen dem Verbindungselement und dem Prüfkopf in Vorschubrichtung um eine gewisse Strecke bewegt wird, wonach die Kraftbeaufschlagung abgebaut wird bzw. umgekehrt wird, so daß unter Beibehaltung der Lage des Ringteils der rückwärtige Abschnitt der Vorschubeinrichtung nachgezogen werden kann. Die Vielzahl von Verbindungselementen, die in vorgegebenen Abständen entlang der Vorschubeinrichtungen vorgesehen sind, bewirken auch bei sehr glatten Innenwänden, z.B. bei verschlammten und verölten Rohrleitungen, einen sicheren Vorschub des Prüfkopfes aufgrund der großen Gesamtfläche, mit der die Ringteile der einzelnen Verbindungselemente mit der Innenwand in Verbindung stehen sowie der auf diesen Ringteilen angeordneten, den Reibungswiderstand in einer Richtung erhöhenden Bauteile. Allerdings ist zur Erzielung dieses Zweckes noch ein erheblicher Bauaufwand erforderlich.

Aufgabe der vorliegenden Erfindung ist es, eine Vorrichtung zur Prüfung von Hohlräumen zu schaffen, die einen geringeren Bauaufwand erfordert und trotzdem einen sicheren Vorschub auch bei glatten Innenwänden der zu überprüfenden Hohlräume gewährleistet, ohne die Vorschubeinrichtung übermäßig zu beanspruchen.

Ausgehend von einer Vorrichtung zur Prüfung von Hohlräumen, wie Kanälen, Rohrleitungen oder dgl., die einen Prüfkopf, einen Vorschubwagen und eine Vorschubeinrichtung aufweist, um den Vorschubwagen und den an ihm befestigten Prüfkopf in dem zu inspizierenden Hohlraum zu verschieben, wird zur Lösung dieser Aufgabe vorgeschlagen, daß der Vorschub-wagen aus zwei Wagenhälften besteht, die im Abstand voneinander und in Längsrichtung des Hohlraums gesehen, hintereinander angeordnet sind, daß die vordere Wagenhälfte mit dem Prüfkopf versehen ist, daß die hintere Wagenhälfte mit der Vorschubeinrichtung verbunden ist, daß beide Wagenhälften mit einer Spreizvorrichtung versehen sind, und daß die beiden Wagenhälften über eine den Abstand zwischen ihnen periodisch verändernde Koppeleinrichtung verbunden sind.

Diese Koppeleinrichtung kann aus einer in der einen Wagenhälfte befestigten Zahnstange, die sich parallel zur Längsrichtung des Hohlraums bis in die andere Wagenhälfte erstreckt und aus einem Schritt- oder Vorschubschaltwerk im Inneren der anderen Wagenhälfte bestehen, deren Antriebsritzel mit der Zahnstange kämmt.

Weitere Möglichkeiten für die Koppeleinrichtung sind ein oder mehrere Zylinder oder ein Faltenbalg, die pneumatisch oder hydraulisch beaufschlagt werden bzw. Seilzugeinrichtungen.

Die erfindungsgemäße Aufteilung des Vorschubwagens in zwei Wagenhälften, die über eine Koppeleinrichtung miteinander dergestalt verbunden sind, daß der Abstand zwischen ihnen periodisch veränderbar ist, bietet den Vorteil mit einem geringeren Bauaufwand einen sicheren Vorschub in verschlammten und/oder verölten Rohrleitungen zu gewährleisten, auch wenn bereits ein großer Abstand zwischen der Vorrichtung und der Erdoberfläche zurückgelegt worden ist. Es erfolgt ein schrittweises Verschieben erst der vorderen Wagenhälfte, die nach ihrem Vorschub durch die Spreizeinrichtung im Hohlraum festgelegt wird, wonach durch das Schritt- oder Vorschubwerk mit dem zugehörigen Ritzel, das in der feststehenden Zahnstange kämmt, die zweite Wagenhälfte bis in unmittelbarer Nähe der ersten Wagenhälfte befördert wird und dort ebenfalls durch Betätigung ihrer Spreizeinrichtung im Rohr festgeklemmt zu werden. Danach wird die Spreizeinrichtung der vorderen Wagenhälfte außer Eingriff mit der Rohrinnenwand gebracht, so daß die vordere Wagenhälfte erneut in Vorwärtsrichtung verschoben werden kann, wobei nunmehr das Ritzel des innenliegenden Schritt- oder Vorschubwerks in entgegengesetzter Richtung mit der Zahnstange kämmt.

Im folgenden wird die Erfindung anhand der Zeichnung näher erläutert, in der eine schematische Darstellung der erfindungsgemäßen Vorschubeinrichtung gegeben ist; es zeigen:
- Fig. 1: einen Schnitt durch einen zu inspizierenden Hohlraum und den in ihm enthaltenen Vorschubwagen und
- Fig. 2a: bis 2c schematisch drei mögliche Stellungen der beiden Wagenhälften.

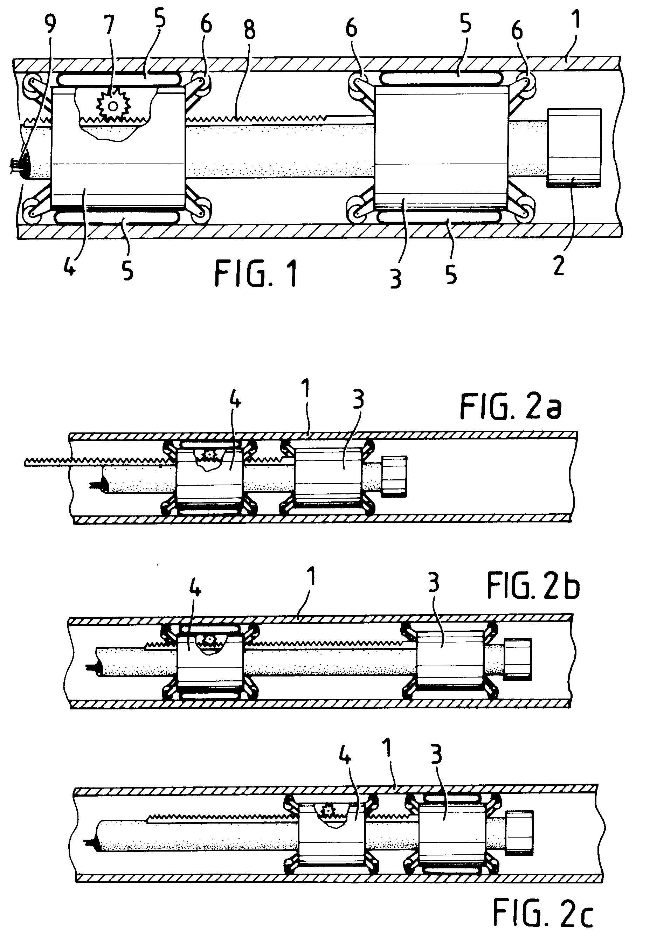

In Fig. 1 ist mit 1 die Wandung des zu inspizierenden Hohlraums, z.B. eines Abwasserkanals bezeichnet, in dem ein Vorschubwagen bewegt wird, der aus zwei Wagenhälften 3, 4 besteht, wobei die vordere Wagenhälfte 3 mit dem Prüfkopf 2 versehen ist, der die Meß- oder Arbeitsgeräte zur Untersuchung des Zustandes des Hohlraumes aufweist. In Längsrichtung des Kanals 1 gesehen und im Abstand von der vorderen Wagenhälfte 3 ist die hintere Wagenhälfte 4 dergestalt angeordnet, daß ihr Abstand zur vorderen Wagenhälfte periodisch veränderbar ist. Zu diesem Zweck ist die vordere Wagenhälfte 3 mit einer fest in ihr angeordneten sich parallel zur Längsachse des Kanals 1 erstreckenden und in Richtung zur hinteren Wagenhälfte 4 weisenden Zahnstange 7 versehen, welche die hintere Wagenhälfte durchsetzt. In dieser wiederum ist ein Schritt- oder Vorschubwerk angeordnet, das mit einem aus der Wagenhälfte herausragenden Ritzel 7 versehen ist, welches kämmend in die Zahnstange 8 eingreift. Je nach Betätigungsrichtung dieses Antriebsritzels 7 kann der Abstand zwischen den beiden Wagenhälften verringert oder vergrößert werden.

Sowohl die vordere Wagenhälfte 3 als auch die hintere Wagenhälfte 4 ist zum einem mit Laufrollen 6 versehen, die sich auf der Innenwand des Kanals 1 abstützen als auch mit jeweils einer Spreizeinrichtung 5 versehen, mit der sich die zugehörige Wagenhälfte im Inneren des Hohlraums festklemmen kann. Die Spreizeinrichtung kann z.B. aus einer aufblasbaren Manschette bestehen, deren Außenwand bei Druckbeaufschlagung fest an der Innenwandung des Kanals 1 anliegt und so ein Verschieben der zugehörigen Wagenhälfte verhindert.

Die aus der Zahnstange 8 und dem Antriebsritzel 7 bestehende Koppeleinrichtung zwischen den beiden Wagenhälften 3 und 4 bewirkt nun, daß nach dem Vorschub der vorderen Wagenhälfte 3 mit dem zugehörigen Prüfkopf 2 sowie Betätigung der Spreizeinrichtung 5 diese Wagenhälfte im Rohrinneren festgestellt wird. Die Spreizeinrichtung 5 der zweiten Wagenhälfte 4 wird deaktiviert und das Antriebsritzel 7 derart betätigt, daß es die zweite Wagenhälfte zur ersten Wagenhälfte hin befördert, wonach die Spreizeinrichtung der zweiten Wagenhälfte 4 aktiviert wird, um diesen festzuklemmen. Nun kann die erste Wagenhälfte 3 durch Deaktivierung ihrer Spreizeinrichtung 5 erneut vorgeschoben werden (Fig. 2a bis 2c).

Mit geringstmöglichem Bauaufwand erhält man also einen sicheren Vorschub des Vorschubwagens und damit des Prüfkopfs auch an Stellen, die sehr weit entfernt sind von der Austrittstelle der Gesamtvorrichtung auf dem Erdboden bzw. der Pipeline, so daß ohne übermäßige Belastung der oftmals mehrere hundert Meter langen schlauchförmigen Vorschubeinrichtung mit den innenliegenden Meß- und Versorgungsleitungen 9 der aus den beiden Wagenhälften 3 und 4 bestehende Vorschubwagen problemlos vorgeschoben werden kann.

Es ist auch möglich, die beiden Wagenhälften über flexible Elemente, die bei Bedarf versteift werden können, zu verbinden, um so Kurven innerhalb der Kanäle zu befahren. Innerhalb der flexiblen Elemente verlaufen auch vorteilhafterweise die Meß- und Steuerleitungen, die sowohl die Spreizeinrichtungen mit Kraft beaufschlagen als auch die vom Prüfkopf stammenden Daten übermitteln.

## Patentansprüche

1. Vorrichtung zur Prüfung von Hohlräumen, wie Kanälen, Rohrleitungen oder dgl., die einen Prüfkopf, einen Vorschubwagen und eine Vorschubeinrichtung aufweist, um den Vorschubwagen und den an ihm befestigten Prüfkopf in den zu inspizierenden Hohlräumen zu verschieben, dadurch gekennzeichnet, daß der Vorschubwagen aus zwei Wagenhälftenbesteht, die im Abstand voneinander und in Längsrichtung des Hohlraums gesehen hintereinander angeordnet sind, daß die vordere Wagenhälfte mit dem Prüfkopf versehen ist, daß die hintere Wagenhälfte mit der Vorschubeinrichtung verbunden ist, daß beide Wagenhälften mit einer Spreizvorrichtung versehen sind und daß die beiden Wagenhälften über eine den Abstand zwischen ihnen periodisch verändernde Koppeleinrichtung verbunden sind.

2. Vorrichtung nach Anspruch 1, dadurch gekennzeichnet, daß die Koppeleinrichtung aus einer in der einen Wagenhälfte befestigten Zahnstange besteht, die sich parallel zur Längsrichtung des Hohlraums bis in die andere Wagenhälfte erstreckt und aus einem Schritt- oder Vorschubwerk im Inneren der anderen Wagenhälfte besteht, deren Antriebsritzel mit der Zahnstange kämmt.

3. Vorrichtung nach Anspruch 1, dadurch gekennzeichnet, daß die Koppeleinrichtung aus mindestens einem pneumatisch, hydraulisch oder elektrisch betätigten Zylinder besteht.

4. Vorrichtung nach Anspruch 1, dadurch gekennzeichnet, daß die Koppeleinrichtung aus einem biegeflexiblen Faltenbalg besteht, der direkt als Zylinder wirkt.

5. Vorrichtung nach Anspruch 1, dadurch gekennzeichnet, daß die Koppeleinrichtung aus Seilzügen besteht, bzw. aus einer Kombination aus Faltenbalg für das Auseinanderfahren und Seilzug für das Zusammenfahren besteht.
